# EUROPÄISCHE PATENTSCHRIFT

(11) **EP 3 023 193 B1**
(45) Veröffentlichungstag und Bekanntmachung des Hinweises auf die Patenterteilung: **28.05.2025**
(21) Anmeldenummer: 15195849.3
(22) Anmeldetag: 23.11.2015
(51) Int. Cl.: B23Q 7/00, B23Q 1/01, B27M 1/08

(54) **WERKSTÜCKZUFÜHRVORRICHTUNG**
WORKPIECE SUPPLY DEVICE
DISPOSITIF D'INTRODUCTION DE PIECE A USINER

(30) Priorität: 24.11.2014 DE 102014223910
(43) Veröffentlichungstag der Anmeldung: 25.05.2016
(73) Patentinhaber: HOMAG GmbH, 72296 Schopfloch (DE)
(72) Erfinder: Sturm, Christian, 72172 Sulz am Neckar (DE); Schmieder, Volker, 72116 Mössingen (DE); Friese, Stefan, 72285 Pfalzgrafenweiler (DE); Schmid, Gordian, 77776 Bad Rippoldsau-Schapbach (DE)
(74) Vertreter: Hoffmann Eitle

(56) Entgegenhaltungen:
- EP-A1- 0 510 230
- EP-A1- 1 688 227
- EP-A1- 2 098 344
- EP-A1- 3 197 639
- EP-A2- 1 992 464
- EP-A2- 2 660 023
- WO-A1-2009/112051
- WO-A1-2010/041285
- DE-A1- 102009 025 816
- DE-A1- 102013 008 595
- US-A1- 2004 163 930

## Beschreibung

### Technisches Gebiet

Die Erfindung betrifft eine Werkstückzuführvorrichtung gemäß dem Oberbegriff vom Anspruch 1. Eine solche Werkstückzuführvorrichtung ist aus dem Dokument EP1992464A2 bekannt. Auch betrifft die Erfindung ein Verfahren zur Verwendung einer Werkstückzuführvorrichtung und eine Bearbeitungsvorrichtung mit einer solchen Werkstückzuführvorrichtung.

### Stand der Technik

Bearbeitungsvorrichtungen zur Bearbeitung von Werkstücken, insbesondere zum Bearbeiten von Werkstücken aus Holz, Holzwerkstoffen, Kunststoff oder dergleichen, sind im Stand der Technik vielfach bekannt. Solche Bearbeitungsvorrichtungen weisen üblicherweise einen Werkstücktisch mit einer Werkstückhalterung auf, mittels welcher ein Werkstück anordenbar und zumindest zeitweise haltbar ist, um während der Halterung das Werkstück zu bearbeiten. Solche Werkstücktische mit Werkstückhalterungen können im Wesentlichen stillstehend oder mittels Vorschubeinrichtungen verfahrbar ausgebildet sein.

Dabei kann bei einer im Wesentlichen stillstehenden Ausführung des Werkstücktischs mit der Werkstückhalterung das Werkzeug zur Bearbeitung des Werkstücks an das Werkstück selbst herangeführt werden, um aufgrund einer erzeugten Relativbewegung von Werkstück und Werkzeug eine Bearbeitung des Werkstücks zu bewirken.

Alternativ dazu kann bei einer im Wesentlichen verfahrbaren Ausführung des Werkstücktischs mit der Werkstückhalterung das Werkstück zur Bearbeitung an das Werkzeug selbst herangeführt werden, um aufgrund einer erzeugten Relativbewegung von Werkstück und Werkzeug eine Bearbeitung des Werkstücks zu bewirken.

Dazu kann die Bearbeitungsvorrichtung beispielsweise ein stillstehendes oder verfahrbares Portal oder einen stillstehenden oder verfahrbaren Ausleger oder ähnliches aufweisen, an welchem das Werkzeug zur Bearbeitung des Werkstücks wiederum stillstehend oder verlagerbar geführt werden kann, um zusammen mit einer etwaigen Verlagerung des Werkstücks die beabsichtigten Bearbeitungen am Werkstück vornehmen zu können. Dabei kann entweder das Werkstück am Werkzeug vorbeigeführt werden oder umgekehrt oder es können sich auch sowohl das Werkstück als auch das Werkzeug bei der Bearbeitung verlagern, so dass eine gezielte Relativbewegung zwischen Werkzeug und Werkstück vorgesehen wird, um das Werkstück beispielsweise entlang einer Seite oder Kante bearbeiten zu können.

Bei solchen Bearbeitungsvorrichtungen müssen die Werkstücke der Bearbeitungsvorrichtung zugeführt werden, so dass die Werkstücke von der Bearbeitungsvorrichtung automatisiert bearbeitet werden können.

Bei heutigen Bearbeitungsvorrichtungen sind Werkstückzuführvorrichtungen bekannt, bei welchen jeweils ein Werkstück nach dem anderen der Bearbeitungsvorrichtung zugeführt wird. Dadurch wird jeweils ein Werkstück nach den anderen der Bearbeitungsvorrichtung zugeführt, in dieser bearbeitet und wieder abgeführt. Erst danach wird das nächste Werkstück zugeführt, wenn die Bearbeitungsvorrichtung zur Aufnahme des nächsten Werkstücks frei geworden ist. Dies bedingt, dass die Werkstücke nur seriell zugeführt und bearbeitet werden können, was die Effektivität der Bearbeitung der Werkstücke grundsätzlich beschränkt.

### Darstellung der Erfindung, Aufgabe, Lösung, Vorteile

Es ist die Aufgabe der Erfindung, eine Werkstückzuführvorrichtung und eine Bearbeitungsvorrichtung zu schaffen, welche eine erhöhte Effektivität bei der Bearbeitung von Werkstücken aufweist.

Diese Aufgabe zur Werkstückzuführvorrichtung wird mit den Merkmalen von Anspruch 1 gelöst.

Ein Ausführungsbeispiel der Erfindung betrifft eine Werkstückzuführvorrichtung mit einer Werkstückaufnahmeposition zum Auflegen von Werkstücken und mit einer Werkstückentnahmeposition zum Entnehmen von Werkstücken, mit einer Werkstückfördervorrichtung zum Fördern aufgelegter Werkstücke von der Werkstückaufnahmeposition bis zu einer Werkstückentnahmeposition, von welcher die Werkstücke von einer Zuführvorrichtung entnehmbar und einem nachgelagerten Werkstücktisch einer Bearbeitungsvorrichtung zuführbar sind, mit Anschlagelementen zum Positionieren und zum Geradedrücken der Werkstücke insbesondere mittels der Zuführvorrichtung, wobei in der Werkstückentnahmeposition mehrere Werkstücke zeitgleich und benachbart zueinander und/oder nacheinander bereitstellbar sind. Dadurch kann je nach Bedarf und Größe ein Werkstück oder auch mehrere Werkstücke gleichzeitig zugeführt werden und der Zuführvorrichtung übergeben werden, so dass sie einzeln oder mehrere gleichzeitig oder alternativ auch mehrere nacheinander dem Werkstücktisch zugeführt werden, damit sie effektiv bearbeitet werden können. So kann bei sehr langen Werkstücken nur ein Werkstück mit der Werkstückzuführvorrichtung zur Verfügung gestellt werden oder bei kleineren Werkstücken können diese nacheinander zur Verfügung gestellt und mit der Zuführvorrichtung in den Werkstücktisch nebeneinander eingelegt werden oder sogar gleichzeitig zur Verfügung gestellt werden und gleichzeitig mit der Zuführvorrichtung in den Werkstücktisch eingelegt werden. Dabei sind die mehreren Werkstücke beabstandet voneinander angeordnet, so dass sie insbesondere auch an ihren Endbereichen bearbeitbar sind.

Besonders vorteilhaft ist es, wenn die Werkstückfördervorrichtung eine Riemen-, Rollen- und/oder Kettenfördereinrichtung aufweist, mittels welcher das Werkstück oder die Werkstücke zwischen der Werkstückaufnahmeposition und der Werkstückentnahmeposition transportierbar sind. So kann ein Werker oder ein Roboter beispielsweise die Werkstücke in der Werkstückaufnahmeposition auf die Werkstückzuführvorrichtung auflegen, diese werden dann mittels der Werkstückfördervorrichtung in die Werkstückentnahmeposition verfahren, so dass eine Zuführvorrichtung das Werkstück oder die Werkstücke dort abholen und dem Werkstücktisch zuführen kann.

Dabei ist es auch vorteilhaft, wenn die Riemen-, Rollen- und/oder Kettenfördereinrichtung eine Mehrzahl von umlaufenden Riemen und/oder Ketten und/oder eine Mehrzahl von Rollen aufweist, mittels welchen zumindest zwei in einer ersten Richtung (x-Richtung) benachbart zueinander angeordnete Werkstücke in einer zweiten Richtung (y-Richtung), die insbesondere senkrecht zur ersten Richtung angeordnet ist, transportierbar sind. Dadurch können mindestens zwei Werkstücke auch gleichzeitig und seitlich versetzt zueinander transportiert werden. Dies erhöht die Effektivität der Vorrichtung.

Auch ist es vorteilhaft, wenn die Werkstücke in der ersten Richtung (x-Richtung) in der Werkstückentnahmeposition definiert positionierbar sind. So können die Werkstücke in der Längsrichtung insbesondere des Werkstücktischs benachbart zueinander mit definierter Position in x-Richtung positioniert und transportiert werden, so dass sie bei einer späteren Einspannung in den Werkstücktisch bereits den richtigen definierten Abstand und eine definierte Position einnehmen.

Dabei ist es vorteilhaft, wenn ein Positionsschieber oder andere Positioniermittel vorgesehen sind, mittels welchem ein Werkstück in der ersten Richtung (x-Richtung) in der Werkstückentnahmeposition positionierbar ist.

Dazu wenn zumindest ein erstes Anschlagelement oder erste Anschlagelemente vorgesehen sind, an welchen Werkstücke anlegbar sind, mittels welchem oder mittels welchen eine Werkstückposition in der ersten Richtung definierbar ist. Dadurch können je nach Anzahl der in x-Richtung benachbarter Werkstücke entsprechende Anschlagelemente vorgesehen sein, damit die Werkstücke beim Transport in y-Richtung in der x-Richtung definiert positioniert sind.

Erfindungsgemäß sind die Werkstücke insbesondere in der Werkstückentnahmeposition in der zweiten Richtung (y-Richtung) in der Werkstückentnahmeposition definiert positionierbar und gerade drückbar.

Dadurch können die Werkstücke bei einer Krümmung in y-Richtung gerade gedrückt werden.

Dabei ist es vorteilhaft, wenn zumindest ein zweites Anschlagelement oder zweite Anschlagelemente vorgesehen sind, an welchen ein Werkstück oder Werkstücke anlegbar sind, mittels welchem oder mittels welchen eine Werkstückposition in der zweiten Richtung (y-Richtung) definierbar ist und/oder gegen welches oder gegen welche das oder die Werkstücke drückbar sind. Dabei kann das Andrücken an die Anschlagelemente je nach Anzahl der Werkstücke gleichzeitig erfolgen, so dass sie gleichzeitig an die Anschlagelemente gedrückt werden.

Besonders vorteilhaft ist es, wenn das Werkstück oder dass die Werkstücke mittels der Zuführvorrichtung gegen das oder die zweiten Anschlagelemente andrückbar und dadurch insbesondere gerade drückbar sind. Dadurch kann das Geradedrücken und das Aufnehmen gleichzeitig erfolgen, so dass eine Übergabe vorteilhafterweise entfallen kann.

Auch kann es vorteilhaft sein, wenn das Werkstück oder dass die Werkstücke mittels einer Ausrichtvorrichtung gegen das oder die zweiten Anschlagelemente andrückbar und dadurch insbesondere gerade drückbar sind. So kann das derart gerade gedrückte Werkstück in der geraden Form von der Zuführvorrichtung aufgenommen werden. Dies kann vorteilhaft sein, weil die Zuführvorrichtung während des Geradedrückvorgangs anderweitige Vorgänge durchführen kann.

Besonders vorteilhaft ist es, wenn ein Werkstück oder eine Mehrzahl von in x-Richtung benachbart zueinander angeordneten Werkstücken von der Zuführvorrichtung aufnehmbar ist oder sind und insbesondere einem Werkstücktisch zuführbar ist oder sind. So kann die Effektivität gesteigert werden.

Vorteilhaft ist es, wenn zwischen der Werkstückaufnahmeposition und der Werkstückentnahmeposition und auf der Werkstückfördervorrichtung eine Vielzahl von Werkstücken pufferbar sind. So kann durch den Werker oder durch einen Roboter eine Vielzahl von Werkstücken aufgelegt werden, die dann zu einem späteren Zeitpunkt nach und nach bearbeitet werden können. Dadurch kann ein gewisser Vorrat auf der Vorrichtung gepuffert werden, so dass die Flexibilität der Bearbeitung bei geringem zeitlichem Zufuhraufwand erreichbar ist.

Auch ist es vorteilhaft, wenn weiterhin eine Werkstückabführvorrichtung vorgesehen ist, mittels welcher Werkstücke, wie insbesondere bearbeitete Werkstücke, aus einer Bearbeitungsvorrichtung abführbar sind. Dadurch kann automatisiert das jeweilige bearbeitete Werkstück vom Werkstücktisch entfernt und weiterverarbeitet werden.

So ist es besonders vorteilhaft, wenn die Werkstückabführvorrichtung unterhalb oder oberhalb der Werkstückzuführvorrichtung angeordnet ist. So kann die benötigte Fläche für die Zufuhr und für die Abfuhr verwendet werden, wobei die Zufuhr und die Abfuhr in höhenversetzten Ebenen erfolgt.

Dabei ist es auch vorteilhaft, wenn die Werkstückabführvorrichtung eine Riemen-, Rollen- und/oder Kettenfördereinrichtung aufweist, mittels welcher das Werkstück oder die Werkstücke abtransportierbar sind. Dies erleichtert den Transport der Werkstücke.

Die Aufgabe zur Bearbeitungsvorrichtung wird mit den Merkmalen von Anspruch 15 gelöst.

Ein Ausführungsbeispiel der Erfindung betrifft eine Bearbeitungsvorrichtung, insbesondere zum Bearbeiten von Werkstücken aus Holz, Holzwerkstoffen, Kunststoff oder dergleichen, mit einem Werkstücktisch mit einer Werkstückhalterung zum Halten zumindest eines Werkstücks oder auch mit einer Mehrzahl von Werkstücken, mit einer Werkzeugvorrichtung zum Bearbeiten des in der Werkstückhalterung gehaltenen Werkstücks und mit einer Zuführvorrichtung zum Zuführen zumindest eines Werkstücks zum Werkstücktisch, wobei eine erfindungsgemäße Werkstückzuführvorrichtung vorgesehen ist.

Dabei ist es besonders vorteilhaft, wenn der Werkstücktisch zumindest in seiner Längsrichtung in x-Richtung relativ zur Zuführvorrichtung verlagerbar ist. So kann der Werkstücktisch verschoben werden, um mehrere kurze Werkstücke nacheinander und nebeneinander in den Werkstücktisch einzulegen.

Dabei ist es zweckmäßig, wenn die Zuführvorrichtung zumindest in einer Richtung relativ zum Werkstücktisch verlagerbar ist. Dadurch können die Werkstücke günstig positioniert werden, wenn sie in den Werkstücktisch eingelegt werden.

Auch ist es vorteilhaft, wenn der Werkstücktisch in seiner Längsrichtung, wie in x-Richtung, relativ zur Zuführvorrichtung verlagerbar ist und die Zuführvorrichtung in zwei Richtungen, wie in y-Richtung und in z-Richtung relativ zum Werkstücktisch verlagerbar ist. Auch dies unterstützt die Positionierbarkeit der Werkstücke.

Besonders vorteilhaft ist es, wenn der Werkstücktisch mittels einer Vorschubeinheit in seiner Längsrichtung verlagerbar ist. Dadurch wird das Werkstück mit dem Werkstücktisch verfahrbar angeordnet, so dass es an einem Werkzeug vorbeifahrbar ist.

Dabei ist es zweckmäßig, wenn der Werkstücktisch eine Werkstückhalterung mit einer Anzahl von Spannelementen aufweist, die in der Längsrichtung des Werkstücktischs beabstandet zueinander angeordnet sind. So kann entweder ein Werkstück an mehreren beabstandeten Stellen gespannt werden oder es können auch mehrere Werkstücke gleichzeitig nebeneinander und benachbart zueinander gespannt werden.

Dabei ist es besonders vorteilhaft, wenn der Werkstücktisch zum Halten eines Werkstücks oder einer Mehrzahl von Werkstücken vorgesehen ist, die in Längsrichtung des Werkstücktischs benachbart anordenbar sind. So kann die Effektivität bei der Bearbeitung erhöht werden.

Weitere vorteilhafte Ausgestaltungen sind durch die nachfolgende Figurenbeschreibung und durch die Unteransprüche beschrieben.

### Kurze Beschreibung der Zeichnungen

Nachstehend wird die Erfindung auf der Grundlage zumindest eines Ausführungsbeispiels anhand der Zeichnungen näher erläutert. Es zeigen:
- Figur 1: eine schematische Darstellung einer Bearbeitungsvorrichtung,
- Figur 2: eine schematische Darstellung einer Werkstückzuführvorrichtung in einem Betriebsfall,
- Figur 3: eine schematische Darstellung einer Werkstückzuführvorrichtung in einem weiteren Betriebsfall,
- Figur 4: eine schematische Darstellung einer Werkstückzuführvorrichtung in einem weiteren Betriebsfall,
- Figur 5: eine Detaildarstellung der Werkstückzuführvorrichtung nach Figur 1,
- Figur 6: eine Detaildarstellung der Werkstückzuführvorrichtung nach Figur 1,
- Figur 7: eine Detaildarstellung der Werkstückzuführvorrichtung nach Figur 1,
- Figur 8: eine schematische Darstellung zur Erläuterung des Verfahrensablaufs der Werkstückzuführvorrichtung,
- Figur 9: eine schematische Darstellung zur Erläuterung des Verfahrensablaufs der Werkstückzuführvorrichtung,
- Figur 10: eine schematische Darstellung zur Erläuterung des Verfahrensablaufs der Werkstückzuführvorrichtung,
- Figur 11: eine schematische Darstellung zur Erläuterung des Verfahrensablaufs der Werkstückzuführvorrichtung,
- Figur 12: eine schematische Darstellung zur Erläuterung des Verfahrensablaufs der Werkstückzuführvorrichtung,
- Figur 13: eine schematische Darstellung zur Erläuterung des Verfahrensablaufs der Werkstückzuführvorrichtung,
- Figur 14: eine schematische Darstellung zur Erläuterung des Verfahrensablaufs der Werkstückzuführvorrichtung,
- Figur 15: eine schematische Darstellung zur Erläuterung des Verfahrensablaufs der Werkstückzuführvorrichtung, und
- Figur 16: eine schematische Darstellung zur Erläuterung des Verfahrensablaufs der Werkstückzuführvorrichtung.

### Bevorzugte Ausführung der Erfindung

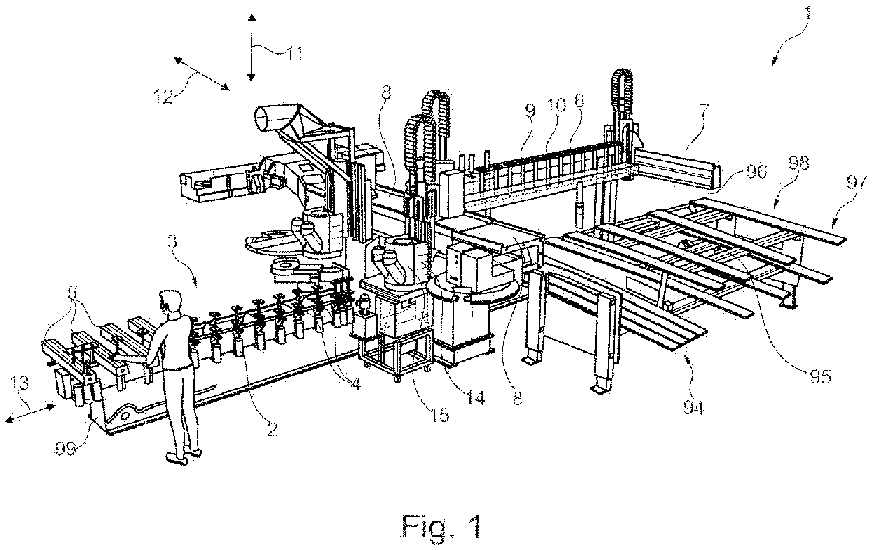

Die Figur 1 zeigt eine Bearbeitungsvorrichtung 1, insbesondere zum Bearbeiten von Werkstücken 5 aus Holz, Holzwerkstoffen, Kunststoff oder dergleichen. Dabei können die Werkstücke 5 beispielsweise eher längliche, balkenartige Werkstücke oder eher flache, eher zweidimensionale, brettartige Werkstücke sein. Dabei sind die Werkstücke 5 in Figur 1 quer zur Längsrichtung des Werkstücktischs 2 angeordnet. Es ist auch möglich, dass die Werkstücke 5 längs zur Längsrichtung 13 des Werkstücktischs 2 angeordnet sind.

Die Bearbeitungsvorrichtung 1 weist einen Werkstücktisch 2 mit einer Werkstückhalterung 3 mit Spannelementen 4 zum Spannen eines Werkstücks auf, mittels welcher Werkstücke 5 zur Bearbeitung sicher gehalten werden können. Der Werkstücktisch 2 ist bevorzugt mit einer Vorschubeinheit 99 verbunden ausgebildet, mittels welcher der Werkstücktisch 2 in Richtung 13 verlagerbar ausgebildet ist. Dabei ist die Richtung 13 vorteilhaft senkrecht zur Richtung 11 und zur Richtung 12 ausgerichtet.

Weiterhin ist eine Zuführvorrichtung 6 vorgesehen, welche dazu dient, ein Werkstück 5 der Werkstückhalterung 3 des Werkstücktischs 2 zuzuführen und das Werkstück 5 auf dem Werkstücktisch 2 zu platzieren.

Weiterhin ist ein Vorrichtungsgestell 7 vorgesehen, an welchem die Zuführvorrichtung 6, auch Manipulator genannt, verlagerbar angeordnet ist. Auch ist eine Führungsvorrichtung 8 vorgesehen, an welcher die Zuführvorrichtung 6 weiterhin verlagerbar angelenkt ist. So ist die Zuführvorrichtung 6 an einer Seite an dem Vorrichtungsgestell 7 und an der anderen Seite an der Führungsvorrichtung 8 verlagerbar angeordnet. Dabei kann die Zuführvorrichtung 6 mit ihrem länglichen Trägerelement 9 und den daran angeordneten Spannelementen 10 sowohl in der vertikalen Richtung 11 als auch in der lateralen Richtung 12, die senkrecht zur Richtung 11 ausgerichtet ist, bewegt werden.

Die Führungsvorrichtung 8 ist vorteilhaft als Portal oder als Traverse ausgebildet, an welcher ein Werkzeugschlitten 14 verlagerbar angeordnet ist, um ein Werkzeug 15 in Richtung 12 und/oder in Richtung 11 verlagern zu können. Dadurch kann das Werkstück 5 in Längsrichtung des Werkstücktischs 2 verlagert werden und dabei an dem Werkzeug 15 zur Bearbeitung vorbeigeführt werden.

Weiterhin ist eine Werkstückzuführvorrichtung 98 mit einer Werkstückaufnahmeposition 97 zum Auflegen von Werkstücken 5 und mit einer Werkstückentnahmeposition 96 zum Entnehmen von Werkstücken 5 vorgesehen. Dabei kann die Zuführvorrichtung 6 das oder die Werkstücke von der Werkstückentnahmeposition aufnehmen und dem Werkstücktisch zuführen.

Die Werkstückzuführvorrichtung 98 ist dabei vorteilhaft als Werkstückzuführtisch ausgebildet. Sie weist vorteilhaft eine Werkstückfördervorrichtung 95 zum Fördern aufgelegter Werkstücke 5 von der Werkstückaufnahmeposition 97 bis zu einer Werkstückentnahmeposition 96 auf, von welcher die Werkstücke 5 von einer Zuführvorrichtung 6 entnehmbar und einem nachgelagerten Werkstücktisch 2 der Bearbeitungsvorrichtung 1 zuführbar sind.

Die Werkstückzuführvorrichtung 98 weist eine Werkstückfördervorrichtung 95 auf, welche als eine Riemen-, Rollen- und/oder Kettenfördereinrichtung ausgebildet ist, mittels welcher das Werkstück 5 oder die Werkstücke 5 zwischen der Werkstückaufnahmeposition 97 und der Werkstückentnahmeposition 96 transportierbar sind.

Dabei weist die Riemen- und/oder Kettenfördereinrichtung eine Mehrzahl von umlaufenden Riemen und/oder Ketten oder eine Mehrzahl von Rollen auf, mittels welchen zumindest zwei in einer ersten Richtung in x-Richtung benachbart zueinander angeordnete Werkstücke 5 in einer zweiten Richtung in y-Richtung, die insbesondere senkrecht zur ersten Richtung angeordnet ist, transportierbar sind.

Unterhalb der Werkstückzuführvorrichtung ist eine Werkstückabführvorrichtung 94 vorgesehen, mittels welcher Werkstücke von dem Werkstücktisch 2 abführbar sind. Dabei kann die Werkstückabführvorrichtung vorteilhaft auch über der Werkstückzuführvorrichtung angeordnet sein. Vorteilhaft sind sie auf der gleichen Fläche auf unterschiedlichen Ebenen angeordnet.

Die Werkstückabführvorrichtung weist dabei vorteilhaft eine Riemen-, Rollen- und/oder Kettenfördereinrichtung auf, mittels welcher das Werkstück oder die Werkstücke abtransportierbar sind.

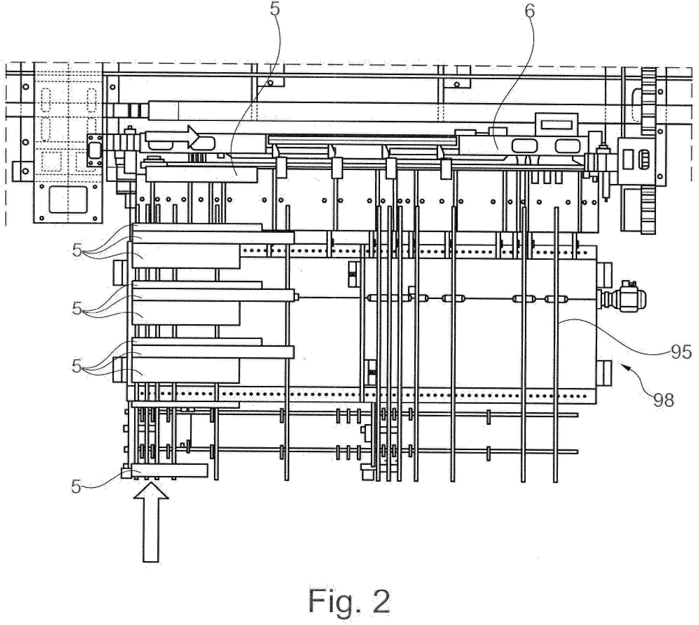

Die Figur 2 zeigt, dass eine Anzahl von Werkstücken 5 in einer Reihe hintereinander auf der Werkstückzuführvorrichtung 98 angeordnet sind, die der Reihe nach von der Zuführvorrichtung 6 aufgenommen und dem nicht dargestellten Werkstücktisch zugeführt werden können. Dadurch wird eine serielle Bearbeitung möglich. Dabei werden die Werkstücke 5 von der Werkstückfördervorrichtung transportiert.

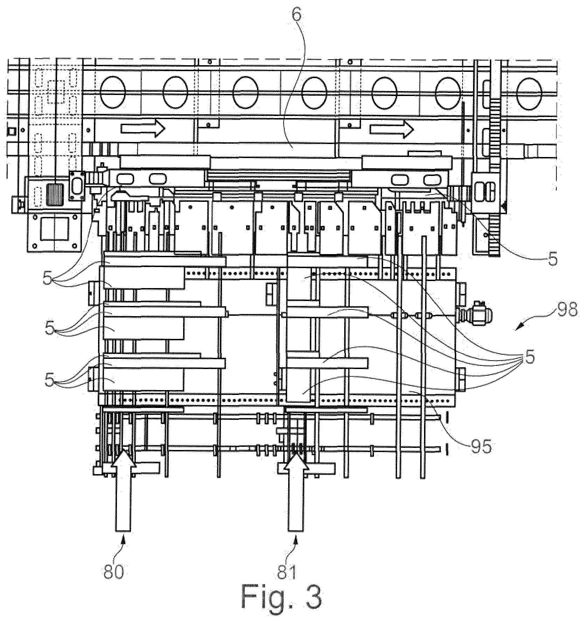

Die Figur 3 zeigt, dass eine Anzahl von Werkstücken 5 in zwei Reihen 80, 81 hintereinander auf der Werkstückzuführvorrichtung 98 angeordnet sind, wobei jeweils zwei Werkstücke 5 der Reihe nach von der Zuführvorrichtung 6 aufgenommen und insbesondere gleichzeitig dem nicht dargestellten Werkstücktisch zugeführt werden können. Dadurch wird eine parallele Bearbeitung von zwei Werkstücken 5 möglich. Dabei kann von einer vorgegebenen Software die Reihenfolge und die Anordnung der Werkstücke vorgegeben werden, so dass zueinander passende Werkstücke benachbart zueinander angeordnet werden, so dass eine Doppelbelegung im Werkstücktisch vorgenommen werden kann. Dabei kann ein Werker die Werkstücke auch nach visueller Vorgabe auf die Reihen 80 bzw. 81 verteilen.

Dies hat nicht nur den Vorteil, dass mehrere Werkstücke gleichzeitig bearbeitet werden können, sondern auch, dass mehr Werkstücke auf der Werkstückzuführvorrichtung zwischengepuffert werden können.

Dabei kann es auch vorteilhaft sein, dass an der Werkstückzuführvorrichtung ein Positionsschieber vorgesehen ist, welcher die Werkstücke aus einer Reihe in die Position eines verschobenen Werkstücks verfährt, so dass die Zuführvorrichtung zumindest zwei Werkstücke gleichzeitig greifen und in den Werkstücktisch einlegen kann.

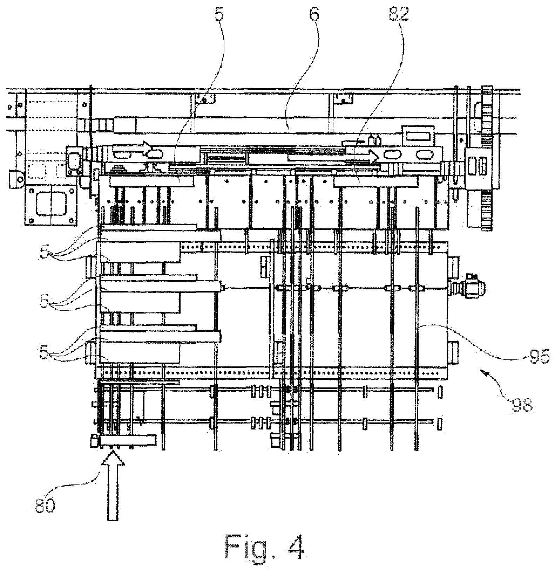

Die Figur 4 zeigt, dass eine Anzahl von Werkstücken 5 in einer Reihe 80 hintereinander auf der Werkstückzuführvorrichtung 98 angeordnet sind, wobei jeweils ein Werkstück 5 der Reihe nach von der Zuführvorrichtung 6 aufgenommen und versetzt werden kann, so dass es als Werkstück 82 benachbart zu einem anderen Werkstück 5 angeordnet werden kann, so dass gleichzeitig zwei Werkstücke 5, 82 dem Werkstücktisch zugeführt werden können. Dadurch wird eine parallele Bearbeitung von zwei Werkstücken 5, 82 möglich.

Dabei kann es auch vorteilhaft sein, dass an der Werkstückzuführvorrichtung 98 ein Positionsschieber vorgesehen ist, welcher die Werkstücke 5 aus der Reihe 80 in die Position des Werkstücks 82 verfährt, so dass die Zuführvorrichtung 6 zumindest zwei Werkstücke 5, 82 gleichzeitig greifen und in den Werkstücktisch einlegen kann.

In den Figuren 3 und 4 wird jeweils die gleichzeitige Verarbeitung von zwei Werkstücken beschrieben. Dies kann grundsätzlich auch mit mehr als zwei Werkstücken gleichzeitig erfolgen.

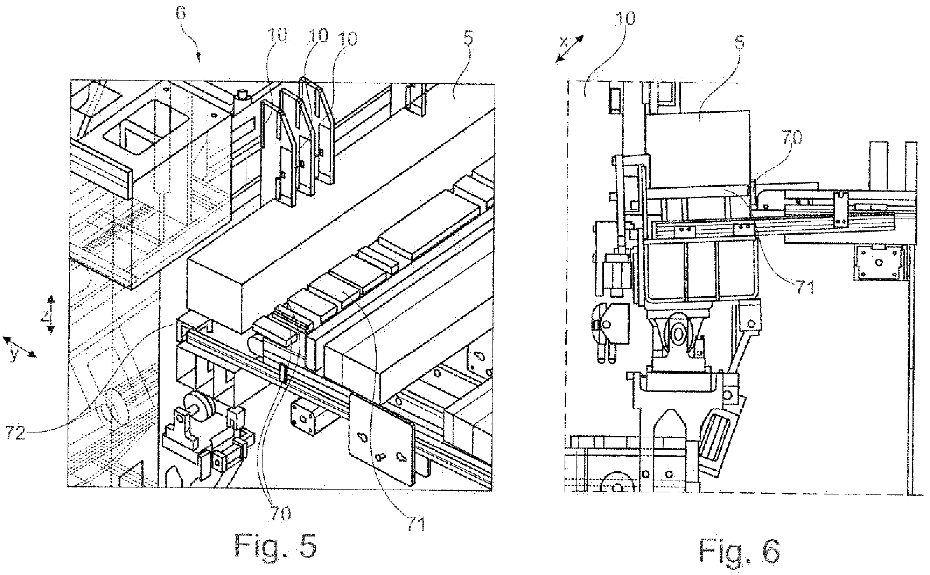

Die Figuren 5 und 6 zeigen die Anordnung eines Werkstücks 5 in der Werkstückentnahmeposition 96, wobei die Zuführvorrichtung 6 mit ihren Greifern 10 das Werkstück 5 greifen und gegen Anschlagelemente 70 in y-Richtung drücken, um das Werkstück gerade zu drücken. Dabei wird die Auflagefläche 71 schräg gestellt und die Anschlagelemente 70 werden pneumatisch hochgefahren, so dass sie nach oben vorragen und das Werkstück dagegen verfahrbar ist. Alternativ kann das Geradedrücken statt mit der Zuführvorrichtung auch mit einer gesonderten Ausrichtvorrichtung erfolgen.

In x-Richtung kann das Werkstück 5 mittels ersten Anschlagelementen 72, wie mittels eines Positionsschiebers, positioniert werden. So sind die Werkstücke 5 in der ersten Richtung, in x-Richtung, in der Werkstückentnahmeposition 96 definiert positionierbar.

In z-Richtung kann das Werkstück 5 durch die Greifer 10 der Zuführvorrichtung 6 gerade gedrückt werden.

Dabei kann die Zuführvorrichtung 6 durch positionsgenaue Aussparungen in der Werkstückzuführvorrichtung 98 im Bereich der Entnahmeposition 96 eingreifen und das positionierte und angedrückte Werkstück aufnehmen.

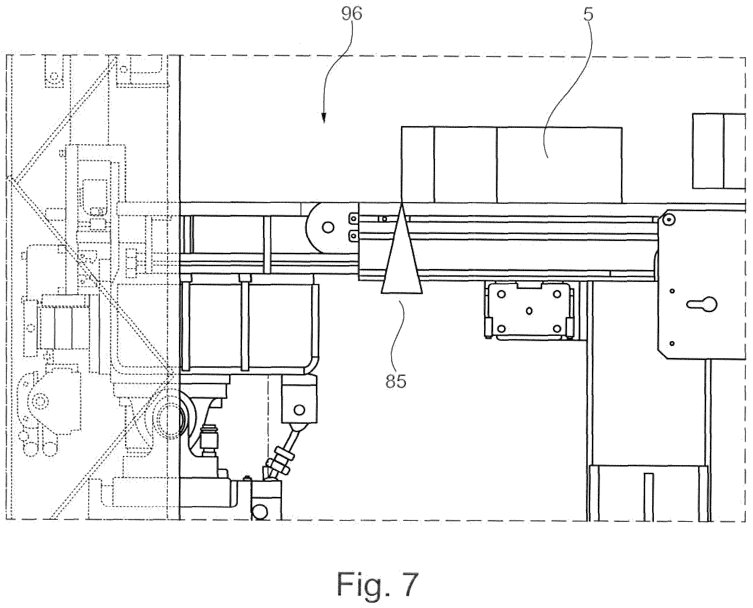

Die Figur 7 zeigt, wie das Werkstück 5 kurz vor Erreichen der Entnahmeposition 96 mittels einer Lichtschranke 85 detektiert wird. Ab dieser Position wird das Werkstück vereinzelt, in dem die nachfolgenden Werkstücke aufgehalten werden bzw. das erkannte Werkstück weiter transportiert wird. Anschließend wird das Werkstück in der Entnahmeposition 96 ausgerichtet. Dazu wird die Auflagefläche der Entnahmeposition schräg geneigt, so dass die vorgesehenen Anschlagelemente ausfahren können. Dadurch kann das Werkstück 5 während des Verschiebevorgangs zentriert werden.

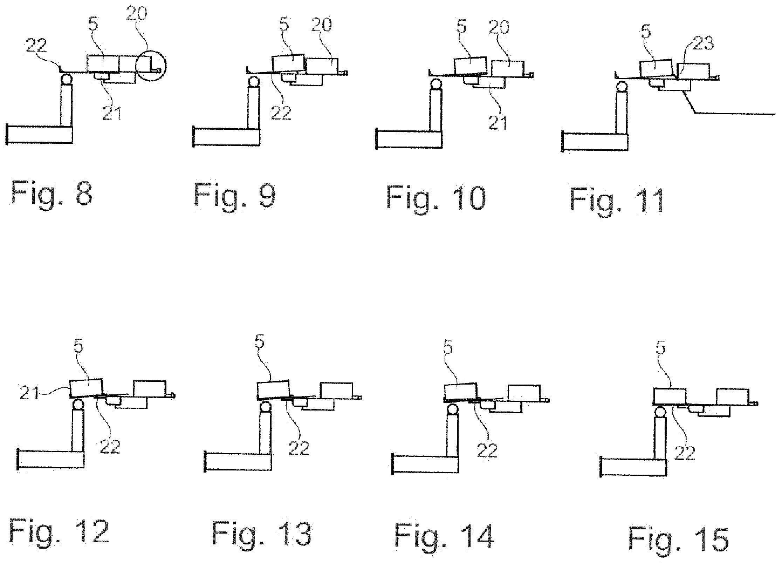

Die Figuren 8 bis 15 zeigen die Vorgehensweise schematisch.

In Figur 8 wird das Werkstück 5 in einer Reihe mit einem anderen Werkstück 20 zugeführt. Der als Transportvorrichtung vorgesehene Riemenförderer 21 transportiert dabei die Werkstücke. Dabei werden die Vorderkante und die Hinterkante mittels eines Sensors bestimmt und es kann die Werkstückbreite bestimmt werden. Die Auflagefläche 22 ist dabei schwenkbar ausgebildet.

In Figur 9 wird die Auflagefläche 22 verschwenkt. Dadurch hebt das Werkstück 5 von der Transportvorrichtung ab.

In Figur 10 wird die Transportvorrichtung 21 zum Rücklauf angesteuert, so dass das Werkstück 20 etwas zurück läuft. Dadurch entsteht ein Spalt zwischen den Werkstücken 5 und 20.

In Figur 11 werden die Anschlagelemente 23 in vertikaler Richtung ausgefahren.

In Figur 12 wird das Werkstück 5 an einen Anschlag 24 geschoben, was mittels eines Schiebers erfolgen kann.

In Figur 13 erfolgt ein Lösen des Ausrichtschiebers und ein Querverschieben in x-Richtung auf die Sollposition in x-Richtung, zur genauen Positionierung für den Werkstücktisch.

In Figur 14 erfolgt ein Ausdrücken des Werkstücks mit dem Ausrichtschieber an den Anschlag.

In Figur 15 erfolgt ein geradeschwenken der Auflagefläche 22 in die Horizontale zum Ausrichten des Werkstücks für die Zuführvorrichtung.

Die Dimensionsprüfung der Länge erfolgt beim Auflegen. Nach positiver Längenmessung darf der Bediener das Werkstück auf den Auflegeplatz legen. Die Längenmessung des zweiten Werkstücks in der Doppelbelegung erfolgt mit dem gleichen Messsensor.

Eine Dimensionsprüfung des Werkstücks 5 kann in y-richtung beim Klemmen mit dem Andrückstößel erfolgen. Die Dimensionsprüfung in z-Richtung kann beim Klemmen mit den Greifern der Zuführvorrichtung erfolgen.

Weiterhin kann auch eine Teileverfolgung beispielsweise mittels eines Barcode-Lesesystems erfolgen.

Auch kann ein Werkstückmarkiersystem vorgesehen sein, mittels welchem Werkstücke markierbar sind.

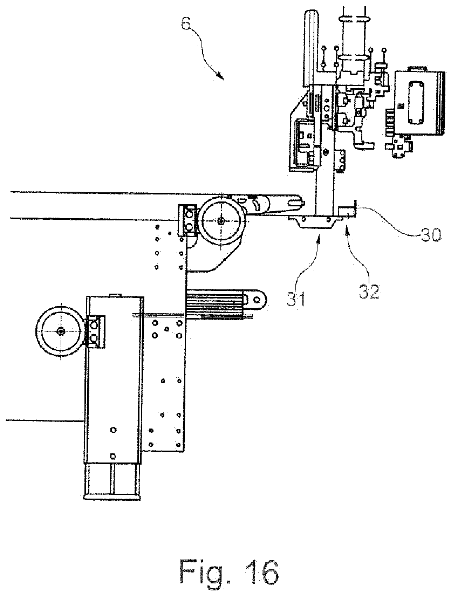

Die Figur 16 zeigt eine Betriebssituation mit einer Glasleistenentnahme. Dabei wird eine kurzzeitige Ablage der Glasleiste 30, welche sich gegenüber dem Greifer 31 der Zuführvorrichtung 6 befindet, auf einem vom Greifer 31 durchfahrbaren Bauteil vorgenommen. Dadurch kann der Greifer 31 die Glasleiste 30 umfahren und mit der Greiferzange 32 des Geifers 31 wieder aufnehmen.

Dabei kann es auch vorteilhaft sein, wenn die Glasleiste mit der dem Werkstücktisch zugewandten Seite der Zuführvorrichtung von dem Greifer 31 aufgenommen wird und auf diesem dort abgelegt wird. Wenn eine Sprosse vorhanden ist, welche beidseitig am Werkstück eine Glasleiste aufweist, kommt zusätzlich üblicherweise die Greifzange 32 zum Einsatz, um die zweite Glasleiste abzulegen oder zu halten.

Gemäß der Erfindung ist es auch vorteilhaft, wenn das Verschieben des Werkstücks in x-Richtung, also in Richtung 13, zur Ausrichtung nicht mit einem Schieber erfolgt. Es können auch andere Mechanismen verwendet werden.

Auch kann die Vorrichtung derart verwendet und angesteuert werden, dass der zweite Anschlag, also ein eher mittiger Anschlag, zur manuellen Doppelbelegung hochgefahren wird, wenn eine Doppelbelegung möglich ist.

Wenn das aufzulegende Werkstück zu lang oder zu breit ist, bleibt der zweite, mittige Anschlag in einer nach unten verlagerten Position und bleibt außer Wirkung. Der Bediener kann dadurch signalisiert bekommen, ob eine Doppelbelegung erwünscht und möglich ist.

## Patentansprüche

1. Werkstückzuführvorrichtung (98) mit einer Werkstückaufnahmeposition (97) zum Auflegen von Werkstücken (5), mit einer Werkstückentnahmeposition (96) zum Entnehmen von Werkstücken (5) und mit einer Werkstückfördervorrichtung (95) zum Fördern aufgelegter Werkstücke (5) von der Werkstückaufnahmeposition (97) bis zu einer Werkstückentnahmeposition (96), von welcher die Werkstücke (5) von einer Zuführvorrichtung (6) entnehmbar und einem nachgelagerten Werkstücktisch (2) einer Bearbeitungsvorrichtung zuführbar sind, **gekennzeichnet, durch** Anschlagelemente zum Positionieren und zum Geradedrücken der Werkstücke mittels der Zuführvorrichtung (6), wobei in der Werkstückentnahmeposition (96) mehrere Werkstücke (5) zeitgleich und benachbart zueinander und nacheinander bereitstellbar sind.

2. Werkstückzuführvorrichtung (98) nach Anspruch 1, **dadurch gekennzeichnet, dass** die Werkstückfördervorrichtung (95) eine Riemen- Rollen- und/oder Kettenfördereinrichtung aufweist, mittels welcher das Werkstück (5) oder die Werkstücke (5) zwischen der Werkstückaufnahmeposition (97) und der Werkstückentnahmeposition (96) transportierbar sind.

3. Werkstückzuführvorrichtung (98) nach Anspruch 2, **dadurch gekennzeichnet, dass** die Riemen- und/oder Kettenfördereinrichtung eine Mehrzahl von umlaufenden Riemen und/oder Ketten oder eine Mehrzahl von Rollen aufweist, mittels welchen zumindest zwei in einer ersten Richtung (x-Richtung, 13) benachbart zueinander angeordnete Werkstücke in einer zweiten Richtung (y-Richtung, 12), die insbesondere senkrecht zur ersten Richtung angeordnet ist, transportierbar sind.

4. Verfahren zur Verwendung einer Werkstückzuführvorrichtung (98) nach einem der vorhergehenden Ansprüche 1 bis 3, **dadurch gekennzeichnet, dass** die Werkstücke (5) in der ersten Richtung (x-Richtung, 13) in der Werkstückentnahmeposition (96) definiert positionierbar sind.

5. Verfahren nach Anspruch 4 zur Verwendung einer Werkstückzuführvorrichtung (98), **dadurch gekennzeichnet, dass** zumindest ein erstes Anschlagelement (70) oder erste Anschlagelemente (70) vorgesehen sind, an welchen Werkstücke (5) anlegbar sind, mittels welchem oder mittels welchen eine Werkstückposition in der ersten Richtung (x-Richtung, 13) definierbar ist.

6. Verfahren nach Anspruch 4 zur Verwendung einer Werkstückzuführvorrichtung (98), **dadurch gekennzeichnet, dass** ein Positionsschieber und/oder ein anderes Positioniermittel vorgesehen ist, mittels welchem ein Werkstück in der ersten Richtung (x-Richtung, 13) in der Werkstückentnahmeposition (96) positionierbar ist.

7. Verfahren nach Anspruch 5 zur Verwendung einer Werkstückzuführvorrichtung, **dadurch gekennzeichnet, dass** als Anschlagelemente (70, 72) Lichtschranken (85) zum Erkennen einer Position des Werkstücks (5) verwendbar sind.

8. Verfahren nach einem der vorhergehenden Ansprüche 4 bis 7 zur Verwendung einer Werkstückzuführvorrichtung (98) oder Verfahren zur Verwendung einer Werkstückzuführvorrichtung (98) nach einem der Ansprüche 1 bis 3, **dadurch gekennzeichnet, dass** die Werkstücke (5) in der zweiten Richtung (y-Richtung, 12) in der Werkstückentnahmeposition (96) definiert positionierbar und gerade drückbar sind.

9. Verfahren nach Anspruch 8 zur Verwendung einer Werkstückzuführvorrichtung (98), **dadurch gekennzeichnet, dass** zumindest ein zweites Anschlagelement (70, 72) oder zweite Anschlagelemente (70, 72) vorgesehen sind, an welchen Werkstücke (5) anlegbar sind, mittels welchem oder mittels welchen eine Werkstückposition in der zweiten Richtung (y-Richtung, 12) definierbar ist und/oder gegen welches oder gegen welche das oder die Werkstücke (5) drückbar sind.

10. Verfahren nach Anspruch 8 oder 9 zur Verwendung einer Werkstückzuführvorrichtung (98), **dadurch gekennzeichnet, dass** das Werkstück (5) oder dass die Werkstücke (5) mittels der Zuführvorrichtung (6) gegen das oder die zweiten Anschlagelemente (70, 72) andrückbar und dadurch insbesondere gerade drückbar sind.

11. Verfahren nach Anspruch 8 oder 9 zur Verwendung einer Werkstückzuführvorrichtung (98), **dadurch gekennzeichnet, dass** das Werkstück (5) oder dass die Werkstücke (5) mittels einer Ausrichtvorrichtung gegen das oder die zweiten Anschlagelemente (70, 72) andrückbar und dadurch insbesondere gerade drückbar sind.

12. Verfahren nach einem der vorhergehenden Ansprüche 4 bis 11 zur Verwendung einer Werkstückzuführvorrichtung (98) oder Verfahren zur Verwendung einer Werkstückzuführvorrichtung (98) nach einem der Ansprüche 1 bis 3, **dadurch gekennzeichnet, dass** ein Werkstück (5) oder eine Mehrzahl von in x-Richtung (13) benachbart zueinander angeordneten Werkstücken (5) von der Zuführvorrichtung (6) aufnehmbar ist oder sind und insbesondere einem Werkstücktisch (2) zuführbar ist oder sind.

13. Verfahren nach einem der vorhergehenden Ansprüche 4 bis 12 zur Verwendung einer Werkstückzuführvorrichtung (98) oder Verfahren zur Verwendung einer Werkstückzuführvorrichtung (98) nach einem der Ansprüche 1 bis 3, **dadurch gekennzeichnet, dass** zwischen der Werkstückaufnahmeposition (97) und der Werkstückentnahmeposition (96) und auf der Werkstückfördervorrichtung (95) eine Vielzahl von Werkstücken (5) pufferbar sind.

14. Verfahren nach einem der vorhergehenden Ansprüche 4 bis 13 zur Verwendung einer Werkstückzuführvorrichtung (98) oder Verfahren zur Verwendung einer Werkstückzuführvorrichtung (98) nach einem der Ansprüche 1 bis 3, **dadurch gekennzeichnet, dass** weiterhin eine Werkstückabführvorrichtung (94) vorgesehen ist, mittels welcher Werkstücke (5), wie insbesondere bearbeitete Werkstücke (5), aus einer Bearbeitungsvorrichtung (1) abführbar sind.

15. Verfahren nach Anspruch 14 zur Verwendung einer Werkstückzuführvorrichtung (98), **dadurch gekennzeichnet, dass** die Werkstückabführvorrichtung (94) unterhalb oder oberhalb der Werkstückzuführvorrichtung (98) angeordnet ist.

16. Verfahren nach Anspruch 14 oder 15 zur Verwendung einer Werkstückzuführvorrichtung (98), **dadurch gekennzeichnet, dass** die Werkstückabführvorrichtung (94) eine Riemen- Rollen- und/oder Kettenfördereinrichtung aufweist, mittels welcher das Werkstück (5) oder die Werkstücke (5) abtransportierbar sind.

17. Bearbeitungsvorrichtung (1), insbesondere zum Bearbeiten von Werkstücken aus Holz, Holzwerkstoffen, Kunststoff oder dergleichen, mit einem Werkstücktisch (2) mit einer Werkstückhalterung (3) zum Halten zumindest eines Werkstücks (5), mit einer Werkzeugvorrichtung zum Bearbeiten des in der Werkstückhalterung gehaltenen Werkstücks und mit einer Zuführvorrichtung (6) zum Zuführen zumindest eines Werkstücks (5) zum Werkstücktisch (2), **dadurch gekennzeichnet, dass** eine Werkstückzuführvorrichtung (98) gemäß einem der vorhergehenden Ansprüche vorgesehen ist.

18. Bearbeitungsvorrichtung (1) nach Anspruch 17, **dadurch gekennzeichnet, dass** der Werkstücktisch (2) zumindest in seiner Längsrichtung (x-Richtung,13) relativ zur Zuführvorrichtung (6) verlagerbar ist.

19. Bearbeitungsvorrichtung (1) nach Anspruch 17 oder 18, **dadurch gekennzeichnet, dass** die Zuführvorrichtung (6) zumindest in einer Richtung relativ zum Werkstücktisch (2) verlagerbar ist.

20. Bearbeitungsvorrichtung (1) nach einem der Ansprüche 17 bis 19, **dadurch gekennzeichnet, dass** der Werkstücktisch (2) in seiner Längsrichtung (x-Richtung, 13) relativ zur Zuführvorrichtung (6) verlagerbar ist und die Zuführvorrichtung in zwei Richtungen (y-Richtung, 12, z-Richtung, 11) relativ zum Werkstücktisch (2) verlagerbar ist.

21. Bearbeitungsvorrichtung (1) nach einem der vorhergehenden Ansprüche 17 bis 20, **dadurch gekennzeichnet, dass** der Werkstücktisch (2) mittels einer Vorschubeinheit in seiner Längsrichtung verlagerbar ist.

22. Bearbeitungsvorrichtung (1) nach einem der vorhergehenden Ansprüche 17 bis 21, **dadurch gekennzeichnet, dass** der Werkstücktisch (2) eine Werkstückhalterung (3) mit einer Anzahl von Spannelementen (4) aufweist, die in der Längsrichtung des Werkstücktischs (2) beabstandet zueinander angeordnet sind.

23. Bearbeitungsvorrichtung (1) nach einem der vorhergehenden Ansprüche 17 bis 22, **dadurch gekennzeichnet, dass** der Werkstücktisch (2) zum Halten eines Werkstücks oder einer Mehrzahl von Werkstücken vorgesehen ist, die in Längsrichtung des Werkstücktischs benachbart anordenbar sind.

## Claims

1. Workpiece supply device (98) with a workpiece receiving position (97) for placing workpieces (5), with a workpiece removal position (96) for removing workpieces (5) and with a workpiece conveying device (95) for conveying placed workpieces (5) from the workpiece receiving position (97) to a workpiece removal position (96), from which the workpieces (5) can be removed by a feeding device (6) and fed to a downstream workpiece table (2) of a processing device, **characterized by** stop elements for positioning and straightening the workpieces by means of the feeding device (6), wherein in the workpiece removal position (96) a plurality of workpieces (5) can be provided simultaneously and adjacent to one another and one after the other.

2. The workpiece supply device (98) according to claim 1, **characterized in that** the workpiece conveying device (95) has a belt, roller and/or chain conveyor apparatus by means of which the workpiece (5) or the workpieces (5) can be transported between the workpiece receiving position (97) and the workpiece removal position (96).

3. The workpiece supply device (98) according to claim 2, **characterized in that** the belt and/or chain conveyor apparatus has a plurality of circulating belts and/or chains or a plurality of rollers, by means of which at least two workpieces arranged adjacent to one another in a first direction (x-direction, 13) can be transported in a second direction (y-direction, 12), which is arranged in particular perpendicular to the first direction.

4. Method for using a workpiece supply device (98) according to any one of the preceding claims 1 to 3, **characterized in that** the workpieces (5) can be positioned in a defined manner in the first direction (x-direction, 13) in the workpiece removal position (96).

5. The method according to claim 4 for using a workpiece supply device (98), **characterized in that** at least one first stop element (70) or first stop elements (70) are provided, against which workpieces (5) can be placed, by means of which or by means of which a workpiece position in the first direction (x-direction, 13) can be defined.

6. The method according to claim 4 for using a workpiece supply device (98), **characterized in that** a position slide and/or another positioning means is provided, by means of which a workpiece can be positioned in the first direction (x-direction, 13) in the workpiece removal position (96).

7. The method according to claim 5 for using a workpiece supply device, **characterized in that** light barriers (85) for detecting a position of the workpiece (5) can be used as stop elements (70, 72).

8. The method according to any one of the preceding claims 4 to 7 for using a workpiece supply device (98) or method for using a workpiece supply device (98) according to one of claims 1 to 3, **characterized in that** the workpieces (5) can be positioned in a defined manner and pressed straight in the second direction (y-direction, 12) in the workpiece removal position (96).

9. The method according to claim 8, for using a workpiece supply device (98), **characterized in that** at least one second stop element (70, 72) or second stop elements (70, 72) are provided, against which workpieces (5) can be placed, by means of which a workpiece position in the second direction (y-direction, 12) can be defined and/or against which the workpiece(s) (5) can be pressed.

10. The method according to claim 8 or 9 for using a workpiece supply device (98), **characterized in that** the workpiece (5) or the workpieces (5) can be pressed against the second stop element or elements (70, 72) by means of the feeding device (6) and can thereby be pressed in a straight manner.

11. The method according to claim 8 or 9 for using a workpiece supply device (98), **characterized in that** the workpiece (5) or the workpieces (5) can be pressed against the second stop element(s) (70, 72) by means of an alignment device and can thereby be pressed in a straight manner.

12. The method according to any one of the preceding claims 4 to 11 for using a workpiece supply device (98) or method for using a workpiece supply device (98) according to one of claims 1 to 3, **characterized in that** a workpiece (5) or a plurality of workpieces (5) arranged adjacent to one another in the x-direction (13) can be received by the feeding device (6) and can in particular be fed to a workpiece table (2).

13. The method according to any one of the preceding claims 4 to 12 for using a workpiece supply device (98) or method for using a workpiece supply device (98) according to any one of claims 1 to 3, **characterized in that** a plurality of workpieces (5) can be buffered between the workpiece receiving position (97) and the workpiece removal position (96) and on the workpiece conveying device (95).

14. The method according to any one of the preceding claims 4 to 13 for using a workpiece supply device (98) or the method for using a workpiece supply device (98) according to any one of claims 1 to 3, **characterized in that** a workpiece removal device (94) is also provided, by means of which workpieces (5), such as in particular machined workpieces (5), can be removed from a processing device (1).

15. The method according to claim 14 for using a workpiece supply device (98), **characterized in that** the workpiece removal device (94) is arranged below or above the workpiece supply device (98).

16. The method according to claim 14 or 15 for using a workpiece supply device (98), **characterized in that** the workpiece removal device (94) has a belt, roller and/or chain conveyor apparatus by means of which the workpiece (5) or the workpieces (5) can be transported away.

17. Processing device (1), in particular for processing workpieces made of wood, wood materials, plastic or the like, with a workpiece table (2) with a workpiece holder (3) for holding at least one workpiece (5), with a tool device for processing the workpiece held in the workpiece holder and with a feeding device (6) for feeding at least one workpiece (5) to the workpiece table (2), **characterized in that** a workpiece supply device (98) according to one of the preceding claims is provided.

18. The processing device (1) according to claim 17, **characterized in that** the workpiece table (2) is at least in its longitudinal direction (x-direction, 13) is displaceable relative to the feed device (6).

19. The processing device (1) according to claim 17 or 18, **characterized in that** the feeding device (6) is displaceable at least in one direction relative to the workpiece table (2).

20. The processing device (1) according to any one of claims 17 to 19, **characterized in that** the workpiece table (2) is displaceable in its longitudinal direction (x-direction, 13) relative to the feed device (6) and the feed device is displaceable in two directions (y-direction, 12, z-direction, 11) relative to the workpiece table (2).

21. The processing device (1) according to any one of the preceding claims 17 to 20, **characterized in that** the workpiece table (2) can be displaced in its longitudinal direction by means of a feed unit.

22. The processing device (1) according to any one of the preceding claims 17 to 21, **characterized in that** the workpiece table (2) has a workpiece holder (3) with a number of clamping elements (4) which are arranged at a distance from one another in the longitudinal direction of the workpiece table (2).

23. The processing device (1) according to any one of the preceding claims 17 to 22, **characterized in that** the workpiece table (2) is provided for holding a workpiece or a plurality of workpieces which can be arranged adjacent to one another in the longitudinal direction of the workpiece table.

## Revendications

1. Dispositif d'amenée de pièces à usiner (98) avec un emplacement de réception de pièces à usiner (97) pour la pose de pièces à usiner (5), avec un emplacement de retrait de pièces à usiner (96) pour le retrait de pièces à usiner (5) et avec un dispositif de convoyage de pièces à usiner (95) pour le convoyage de pièces à usiner (5) posées de l'emplacement de réception de pièces à usiner (97) jusqu'à un emplacement de retrait de pièces à usiner (96), duquel les pièces à usiner (5) peuvent être retirées d'un dispositif d'amenée (6) et peuvent être amenées à une table porte-pièce (2) installée en aval d'un dispositif d'usinage, **caractérisé par** des éléments de butée pour positionner et pousser de manière rectiligne des pièces à usiner au moyen du dispositif d'amenée (6), dans lequel plusieurs pièces à usiner (5) peuvent être mises à disposition simultanément et de manière adjacente les unes par rapport aux autres et les unes après les autres dans l'emplacement de retrait de pièces à usiner (96).

2. Dispositif d'amenée de pièces à usiner (98) selon la revendication 1, **caractérisé en ce que** le dispositif de convoyage de pièces à usiner (95) présente un système de convoyage à courroies, à rouleaux et/ou à chaînes, au moyen duquel la pièce à usiner (5) ou les pièces à usiner (5) peuvent être transportées entre l'emplacement de réception de pièces à usiner (97) et l'emplacement de retrait de pièces à usiner (96).

3. Dispositif d'amenée de pièces à usiner (98) selon la revendication 2, **caractérisé en ce que** le système de convoyage à courroies et/ou à chaînes présente une multitude de courroies et/ou de chaînes circulant en rotation ou une multitude de rouleaux, au moyen desquels au moins deux pièces à usiner disposées de manière adjacente l'une par rapport à l'autre dans une première direction (direction x, 13) peuvent être transportées dans une deuxième direction (direction y, 12), qui est disposée en particulier perpendiculairement à la première direction.

4. Procédé d'utilisation d'un dispositif d'amenée de pièces à usiner (98) selon l'une des revendications précédentes 1 à 3, **caractérisé en ce que** les pièces à usiner (5) peuvent être positionnées de manière définie dans l'emplacement de retrait de pièces à usiner (96) dans la première direction (direction x, 13).

5. Procédé selon la revendication 4 pour l'utilisation d'un dispositif d'amenée de pièces à usiner (98), **caractérisé en ce qu'**au moins un premier élément de butée (70) ou des premiers éléments de butée (70) sont prévus, sur lesquels des pièces à usiner (5) peuvent être placées, au moyen duquel ou au moyen desquels une position de pièce dans la première direction (direction x, 13) peut être définie.

6. Procédé selon la revendication 4 pour l'utilisation d'un dispositif d'amenée de pièces à usiner (98), **caractérisé en ce qu'**un curseur de position et/ou un autre moyen de positionnement est prévu, au moyen duquel une pièce peut être positionnée dans l'emplacement de retrait de pièces à usiner (96) dans la première direction (direction x, 13).

7. Procédé selon la revendication 5 pour l'utilisation d'un dispositif d'amenée de pièces à usiner, **caractérisé en ce que** des barrières photoélectriques (85) peuvent être utilisées comme éléments de butée (70, 72) pour identifier une position de la pièce à usiner (5).

8. Procédé selon l'une des revendications précédentes 4 à 7 pour l'utilisation d'un dispositif d'amenée de pièces à usiner (98) ou procédé pour l'utilisation d'un dispositif d'amenée de pièces à usiner (98) selon l'une quelconque des revendications 1 à 3, **caractérisé en ce que** les pièces à usiner (5) peuvent être positionnées de manière définie dans l'emplacement de retrait de pièces à usiner (96) dans la deuxième direction (direction y, 12) et peuvent être poussées de manière rectiligne.

9. Procédé selon la revendication 8 pour l'utilisation d'un dispositif d'amenée de pièces à usiner (98), **caractérisé en ce qu'**au moins un deuxième élément de butée (70, 72) ou des deuxièmes éléments de butée (70, 72) sont prévus, sur lesquels des pièces à usiner (5) peuvent être placées, au moyen duquel ou desquels une position de pièce dans la deuxième direction (direction y, 12) peut être définie et/ou contre lequel ou contre lesquels la ou les pièces à usiner (5) peuvent être poussées.

10. Procédé selon la revendication 8 ou la revendication 9 pour l'utilisation d'un dispositif d'amenée de pièces à usiner (98), **caractérisé en ce que** la pièce à usiner (5) ou les pièces à usiner (5) peuvent être poussées contre le ou les deuxième(s) élément(s) de butée (70, 72) au moyen du dispositif d'amenée (6) et peuvent ainsi être poussées en particulier de manière rectiligne.

11. Procédé selon la revendication 8 ou la revendication 9 pour l'utilisation d'un dispositif d'amenée de pièces à usiner (98), **caractérisé en ce que** la pièce à usiner (5) ou les pièces à usiner (5) peuvent être poussées contre le ou les deuxièmes éléments de butée (70, 72) au moyen d'un dispositif d'alignement et peuvent ainsi être poussées en particulier de manière rectiligne.

12. Procédé selon l'une des revendications 4 à 11 précédentes pour l'utilisation d'un dispositif d'amenée de pièces à usiner (98) ou procédé d'utilisation d'un dispositif d'amenée de pièces à usiner (98) selon l'une des revendications 1 à 3, **caractérisé en ce qu'**une pièce à usiner (5) ou une multitude de pièces à usiner (5) disposées de manière adjacente les unes par rapport aux autres dans la direction x (13) peut être reçue ou peuvent être reçues par le dispositif d'amenée (6) et peut être amenée ou peuvent être amenées en particulier à une table porte-pièce (2).

13. Procédé selon l'une des revendications 4 à 12 précédentes pour l'utilisation d'un dispositif d'amenée de pièces à usiner (98) ou procédé d'utilisation d'un dispositif d'amenée de pièces à usiner (98) selon l'une quelconque des revendications 1 à 3, **caractérisé en ce qu'**une pluralité de pièces à usiner (5) peuvent être mises en tampon entre l'emplacement de réception de pièces à usiner (97) et l'emplacement de prélèvement de pièces à usiner (96) et sur le dispositif de convoyage de pièces à usiner (95).

14. Procédé selon l'une des revendications 4 à 13 précédentes pour l'utilisation d'un dispositif d'amenée de pièces à usiner (98) ou procédé d'utilisation d'un dispositif d'amenée de pièces à usiner (98) selon l'une des revendications 1 à 3, **caractérisé en ce qu'**un dispositif d'évacuation de pièces à usiner (94) est par ailleurs prévu, au moyen duquel des pièces à usiner (5), comme en particulier des pièces à usiner (5) usinées, peuvent être évacuées d'un dispositif d'usinage (1).

15. Procédé selon la revendication 14 pour l'utilisation d'un dispositif d'amenée de pièces à usiner (98), **caractérisé en ce que** le dispositif d'évacuation de pièces à usiner (94) est disposé en dessous ou au-dessus du dispositif d'amenée de pièces à usiner (98).

16. Procédé selon la revendication 14 ou la revendication 15 pour l'utilisation d'un dispositif d'amenée de pièces à usiner (98), **caractérisé en ce que** le dispositif d'évacuation de pièces à usiner (94) présente un système de convoyage à courroies, à rouleaux et/ou à chaînes, au moyen duquel la pièce à usiner (5) ou les pièces à usiner (5) peuvent être transportées.

17. Dispositif d'usinage (1), en particulier pour l'usinage de pièces à usiner en bois, en matériaux dérivés du bois, en matière plastique ou similaire, avec une table porte-pièce (2) avec un support de pièce (3) pour maintenir au moins une pièce à usiner (5), avec un dispositif d'outillage pour l'usinage de la pièce maintenue dans le support de pièce et avec un dispositif d'amenée (6) pour l'amenée d'au moins une pièce à usiner (5) à la table porte-pièce (2), **caractérisé en ce qu'**un dispositif d'amenée de pièces à usiner (98) selon l'une des revendications précédentes est prévu.

18. Dispositif d'usinage (1) selon la revendication 17, **caractérisé en ce que** la table porte-pièce (2) peut être déplacée au moins dans sa direction longitudinale (direction x, 13) par rapport au dispositif d'amenée (6).

19. Dispositif d'usinage (1) selon la revendication 17 ou la revendication 18, **caractérisé en ce que** le dispositif d'amenée (6) peut être déplacé au moins dans une direction par rapport à la table porte-pièce (2),

20. Dispositif d'usinage (1) selon l'une des revendications 17 à 19, **caractérisé en ce que** la table porte-pièce (2) peut être déplacée dans sa direction longitudinale (direction x, 13) par rapport au dispositif d'amenée (6) et le dispositif d'amenée peut être déplacé dans deux directions (direction y, 12, direction z, 11) par rapport à la table porte-pièce (2).

21. Dispositif d'usinage (1) selon l'une des revendications 17 à 20 précédentes, **caractérisé en ce que** la table porte-pièce (2) peut être déplacée dans sa direction longitudinale au moyen d'une unité d'avance.

22. Dispositif d'usinage (1) selon l'une des revendications précédentes 17 à 21, **caractérisé en ce que** la table porte-pièce (2) présente un support de pièce (3) avec un nombre d'éléments de serrage (4) qui sont disposés de manière espacée les uns des autres dans la direction longitudinale de la table porte-pièce (2).

23. Dispositif d'usinage (1) selon l'une des revendications précédentes 17 à 22, **caractérisé en ce que** la table porte-pièce (2) est prévue pour le maintien d'une pièce ou d'une multitude de pièces à usiner qui peuvent être disposées de manière adjacente dans la direction longitudinale de la table porte-pièce.
